# EUROPÄISCHE PATENTSCHRIFT

(11) **EP 3 652 093 B1**
(45) Veröffentlichungstag und Bekanntmachung des Hinweises auf die Patenterteilung: **22.11.2023**
(21) Anmeldenummer: 18731436.4
(22) Anmeldetag: 13.06.2018
(51) Int. Cl.: B65G 47/08, B65G 47/31

(54) **VERFAHREN UND VORRICHTUNG ZUR HANDHABUNG VON STÜCKGÜTERN, ARTIKELN UND/ODER GEBINDEN**
METHOD AND DEVICE FOR HANDLING PIECE GOODS, ARTICLES AND/OR PACKS
PROCÉDÉ ET DISPOSITIF POUR MANIPULER DES MARCHANDISES, ARTICLES ET/OU PAQUETS

(30) Priorität: 14.07.2017 DE 102017212158
(43) Veröffentlichungstag der Anmeldung: 20.05.2020
(73) Patentinhaber: Krones Aktiengesellschaft, 93073 Neutraubling (DE)
(72) Erfinder: WESTERMEIER, Christian, 93073 Neutraubling (DE); MEHDI, Arsalan, 93073 Neutraubling (DE); EHBERGER, Marco, 93073 Neutraubling (DE); KIRZINGER, Johannes, 93073 Neutraubling (DE); BEER, Erhard, 93073 Neutraubling (DE); SCHWALB, Felix, 93073 Neutraubling (DE); KOLLMUSS, Manuel, 93073 Neutraubling (DE); ASTNER, Michael, 93073 Neutraubling (DE); GRIMM, Sebastian, 93073 Neutraubling (DE)
(74) Vertreter: Benninger, Johannes
(86) Internationale Anmeldenummer: PCT/EP2018/065710
(87) Internationale Veröffentlichungsnummer: WO 2019/011565

(56) Entgegenhaltungen:
- EP-A1- 1 223 121
- EP-A1- 3 072 837
- WO-A1-2009/011634
- WO-A1-2010/096111
- DE-A1-102006 040 053
- DE-A1-102008 048 831
- DE-A1-102014 224 550
- US-A- 2 571 790
- US-A- 3 529 711
- US-A- 4 026 422
- US-A1- 2010 083 622

## Beschreibung

Die vorliegende Erfindung betrifft ein Verfahren und eine Vorrichtung zur Handhabung von Stückgütern, Artikeln und/oder Gebinden gemäß den Merkmalen der unabhängigen Ansprüche 1 bzw. 12.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Je nach angewendetem Lagenbildungsverfahren und/oder verwendeter Handhabungsvorrichtung können zwischen den gemäß einem vorgegebenen Lagenschema bzw. Lagenanordnung angeordneten Stückgütern noch Lücken ausgebildet sein, die vor der Palettierung der Lagen noch entfernt werden müssen. Dies erfolgt beispielsweise durch eine sogenannte Vorgruppierung, bei der die Stückgüter mit Hilfe von seitlichen Anschlag- oder Zentrierelementen gegeneinander ausgerichtet werden, wodurch die gebildete Lage insbesondere die gewünschte Größe und/oder Außenkontur erhält.

Das Dokument DE 10 2013 113 754 A1 beschreibt eine Förder- und Handhabungsvorrichtung für Artikel, Behälter oder Gebinde mit einer Umreifungsstation zur Zusammenfassung der Artikel- oder Behältergruppen zu Umreifungsgebinden und einem Stapelplatz zur Bildung von Palettenlagen mit jeweils mehreren nebeneinander stehenden Umreifungsgebinden je Lage. Die umreiften Gebinde können vom Transporteur zu einer Vorgruppierungsstation abtransportiert werden, wonach die Lagenvorbereitung in der Vorgruppierung erfolgen kann, bspw. mit Unterstützung seitlicher Zentrierungen und anschließendem Überschub der Lage in die Beladeplatte des Palettier-Systems.

Das Dokument DE 10 2013 108 231 A1 offenbart eine Stapel- und/oder Palettiervorrichtung für Gebinde- oder Stückgutlagen, umfassend eine zwischen einer Förderstrecke und/oder einer Übergabestation und einem Ablageplatz für die zu stapelnden Gebinde- oder Stückgutlagen schwenk- und/oder höhenbewegliche Beladeeinrichtung zur Übernahme, zum Transport und zur Ablage von vollständigen Gebinde- oder Stückgutlagen auf einem Ablageplatz, der eine Einrichtung zur Vorzentrierung der von der Förderstrecke und/oder von der Übergabestation übernommenen Gebinde- oder Stückgutlage sowie zu deren Nachzentrierung nach der Ablage auf dem Ablageplatz zugeordnet ist. WO2010/096111A1 offenbart ein Verfahren gemäß dem Oberbegriff des Anspruchs 1 sowie eine Vorrichtung gemäß dem Oberbegriff des Anspruchs 12.

Die Aufgabe der Erfindung besteht darin, ein Verfahren und eine Vorrichtung zur Handhabung und/oder Gruppierung von Stückgütern, Artikeln und/oder Gebinden bereitzustellen, die auch bei einem hohen Durchsatz bei der Lagenbildung ein prozesssicheres und fehlerfreies Arbeiten ermöglichen.

Diese Aufgabe wird durch die Gegenstände der unabhängigen Ansprüche, d.h. durch ein Verfahren und eine Vorrichtung zur Handhabung und/oder Gruppierung von Stückgütern, Artikeln und/oder Gebinden gelöst, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung betrifft ein Verfahren und eine Vorrichtung zur Handhabung und/oder Gruppierung von Stückgütern, Artikeln und/oder Gebinden bei und/oder im Zusammenhang mit deren Gruppierung und/oder deren Lagenbildung, insbesondere zum Zwecke der Ausbildung von aus jeweils mehreren Stückgütern, Artikeln und/oder Gebinden bestehenden palettierfähigen Lagen. Nachfolgend wird generell von Stückgütern gesprochen. Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die Vorrichtung umfasst mindestens eine Zuführeinrichtung zur ein- oder mehrreihige Förderung der Stückgüter, Artikel und/oder Gebinde in einer Transportrichtung. Die in einer Reihe ohne Abstände bewegten und/oder zu einem - insbesondere Manipulationsbereich bzw. Erfassungsbereich genannten - Bereich beförderten, mindestens zwei unmittelbar aufeinanderfolgenden Stückgüter werden vorzugsweise als geschlossene Formation transportiert. Mit dem Begriff der geschlossenen Formation ist eine lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Als abweichende Option, die sich gleichwohl auf einige Ausführungsvarianten des erfindungsgemäßen Verfahrens zum Umgang mit in mindestens einer Reihe hintereinander bewegten Stückgütern und/oder der erfindungsgemäßen Vorrichtung zum Umgang mit in mindestens einer Reihe hintereinander bewegten Stückgütern oder auch auf mehrere Ausführungsvarianten dieses Verfahrens bzw. dieser Vorrichtung beziehen kann, können die in definierten Reihen ohne jeweilige Abstände voneinander bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden. Mit dem Begriff der getakteten Formation und/oder des getakteten Zulaufs ist eine weitgehend regelmäßige Aufeinanderfolge von definierten Reihen von Stückgütern gemeint, die in den definierten Reihen hintereinander transportiert werden, wobei jedoch zwischen aufeinander folgenden Reihen die definierten Lücken auftreten können, was den Begriff der Taktung des Zulaufs bzw. der Taktung der Formationen meint. Die geschlossenen und lückenlosen Reihen im Sinne der vorliegenden Erfindung können jeweils eine endliche Länge haben und eine begrenzte Zahl von Stückgütern umfassen, wonach eine Lücke und einer solchen Lücke ggf. eine weitere solche Reihe mit jeweils lückenlos aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die geschlossenen Reihen einer solchermaßen getakteten Formation können grundsätzlich jeweils eine beliebige Anzahl von Stückgütern umfassen.

Über die mindestens eine Zuführeinrichtung werden die Stückgüter, Artikel und/oder Gebinde ein- oder mehrreihig in jeweils geschlossener und lückenloser Formation zu einem Gruppiermodul mit wenigstens einer Horizontalfördereinrichtung sowie mindestens einem Manipulator für die Stückgüter transportiert. Der Manipulator erfasst mindestens eines der in seinen Erfassungsbereich einlaufenden Stückgüter oder auch Gruppen von zwei oder mehr Stückgütern und bringt diese durch Drehen und/oder Verschieben und/oder Heben in eine definierte Lagenanordnung. Dabei entsteht eine sogenannte vorbereitete palettierfähige Lage, bei der noch Lücken zwischen einzelnen Stückgütern vorhanden sein können, die vor dem eigentlichen Palettierschritt noch entfernt werden müssen.

Aus den in geschlossener Formation einlaufenden Stückgütern wird durch den Manipulator, der insbesondere dem Gruppiermodul zugeordnet, wahlweise aber auch neben dem Gruppiermodul angeordnet sein kann, wenigstens ein transportiertes Stückgut nacheinander erfasst und durch Drehen und/oder Verschieben und/oder Heben in eine definierte Lagenanordnung gebracht. Erfindungsgemäß wird durch den Manipulator wenigstens ein transportiertes Stückgut klemmend erfasst, von der geschlossenen Formation räumlich abgetrennt und in eine definierte relative Zielposition und/oder Zielausrichtung gegenüber nachfolgenden Stückgütern der Formation gebracht.

Aus den geschlossenen Reihen einer getakteten, lückenbehafteten Formationen kann ebenfalls jeweils wenigstens ein transportiertes Stückgut klemmend und/oder kraftschlüssig und/oder formschlüssig erfasst, von der lückenlosen Reihe der getakteten Formation räumlich abgetrennt und in eine definierte relative Zielposition und/oder Zielausrichtung bzw. Lagenanordnung gegenüber nachfolgenden Stückgütern der Formation gebracht werden, wobei meist ein zuvorderst befindliches Stückgut der jeweiligen Reihe mittels des Manipulators erfasst und von der Reihe abgegriffen wird.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Die Stückgüter werden innerhalb des Gruppiermoduls auf der Horizontalfördereinrichtung mit einer Fördergeschwindigkeit der Horizontalfördereinrichtung transportiert, einzelne Stückgüter oder Gruppen von Stückgütern werden durch den Manipulator erfasst und gegriffen und auf der Horizontalfördereinrichtung verschoben, versetzt, positioniert und/oder neu ausgerichtet. Wahlweise können die Stückgüter oder Artikel hierbei gegenüber einer Fördergeschwindigkeit der Horizontalfördereinrichtung verzögert oder beschleunigt und ggf. gedreht und/oder schräg zu einer Förderrichtung der Horizontalfördereinrichtung versetzt werden. Die Fördergeschwindigkeit der Horizontalfördereinrichtung entspricht in der Regel der Zuführgeschwindigkeit, mit der die Stückgüter über die Zuführeinrichtung in das Gruppiermodul einlaufen.

Dem Gruppiermodul ist ein Fördermittel nachgeordnet, wobei es sich hierbei insbesondere um ein Fördermittel einer nachgeordneten Vorgruppierung handeln kann. Somit ist dem Gruppiermodul in Transportrichtung das Fördermittel und/oder eine erste Vorgruppierung nachgeordnet. Weiterhin kann vorgesehen sein, dass der ersten Vorgruppierung in Transportrichtung eine weitere, zweite Vorgruppierung nachgeordnet ist. Die erste Vorgruppierung umfasst gemäß der hier erläuterten Ausführungsvariante mindestens ein Fördermittel für den weiteren Transport der in die Lagenanordnung gebrachten Stückgüter in der Transportrichtung. Die Lagenanordnung von Stückgütern wird nachfolgend auch als vorbereitete palettierfähige Lage bezeichnet. Generell ist aber zu sagen, dass dieses erwähnte Fördermittel auch unabhängig von der ersten Vorgruppierung vorhanden und dem Gruppiermodul nachgeordnet sein kann, d.h. unabhängig vom Vorhandensein einer ersten und/oder zweiten Vorgruppierung, da anstelle dieser Vorgruppierungsmodule ggf. auch andere Handhabungsstationen vorhanden und dem Gruppiermodul nachgeordnet sein können.

Die in die Lagenanordnung gebrachten Stückgüter der vorbereiteten palettierfähigen Lage werden in Transportrichtung von der Horizontalfördereinrichtung des Gruppiermoduls auf das Fördermittel bzw. auf das Fördermittel der Vorgruppierung überführt und wahlweise innerhalb der Vorgruppierung oder unabhängig von einer solchen Vorgruppierung auf dem Fördermittel mit einer Geschwindigkeit des Fördermittels transportiert. Die Geschwindigkeit des Fördermittels entspricht in der Regel der Fördergeschwindigkeit der Horizontalfördereinrichtung und somit auch der Zuführgeschwindigkeit, mit der die Stückgüter über die Zuführeinrichtung in das Gruppiermodul einlaufen.

Nachdem eine definierte Anzahl von Stückgütern einer vorbereiteten palettierfähigen Lage, insbesondere alle Stückgüter einer vorbereiteten palettierfähigen Lage, auf das nachgeordnete Fördermittel bzw. auf das Fördermittel der Vorgruppierung überführt sind, wird in Transportrichtung eine zumindest kurzzeitige Geschwindigkeitsdifferenz zwischen der Fördergeschwindigkeit der Horizontalfördereinrichtung des Gruppiermoduls und der Geschwindigkeit des Fördermittels (der ersten Vorgruppierung) hergestellt. Dies erfolgt insbesondere über eine unterschiedliche Ansteuerung der Fördergeschwindigkeit der Horizontalfördereinrichtung und der Geschwindigkeit des Fördermittels, wobei dieses Fördermittel (wie oben erwähnt) ein Fördermittel der Vorgruppierung sein kann, jedoch nicht sein muss.

Gemäß einer ersten bevorzugten Ausführungsform ist vorgesehen, dass nach dem Übertritt einer kompletten Lagenanordnung an Stückgütern, d.h. nach Übertritt aller Stückgüter einer kompletten vorbereiteten palettierfähigen Lage, das nachgeordnete Fördermittel bzw. das Fördermittel der ersten Vorgruppierung zumindest kurzzeitig gegenüber der Horizontalfördereinrichtung des Gruppiermoduls beschleunigt wird. Dadurch werden die Stückgüter der innerhalb der Vorgruppierung befindlichen palettierfähigen Lage von den Stückgütern einer innerhalb des Gruppiermoduls nachfolgend vorbereiteten palettierfähigen Lage oder einer in Vorbereitung befindlichen palettierfähigen Lage beabstandet. Insbesondere wird ein Abstand zwischen den Stückgütern einer vorauseilenden vorbereiteten palettierfähigen Lage und den Stückgütern einer nachlaufenden palettierfähigen Lage vergrößert. Die nachlaufende palettierfähige Lage muss dabei innerhalb des Gruppiermoduls noch gar nicht fertiggestellt sein, sondern kann sich noch in Vorbereitung befinden, wobei sich insbesondere noch nicht alle Stückgüter in ihrer relativen Zielposition entsprechend dem zu bildenden Lagenschema bzw. Lagenanordnung befinden müssen.

Das nachgeordnete Fördermittel bzw. das Fördermittel der Vorgruppierung weist insbesondere eine Oberfläche auf, die einem Schlupf der Stückgüter in oder entgegen der Transportrichtung bei hoher Geschwindigkeit des Fördermittels entgegen wirkt. Beispielsweise handelt es sich bei dem Fördermittel um ein Endlosförderband mit einer gummierten Oberfläche oder um eine Mattenkette mit leichten Stegen quer oder annähernd quer zur Transportrichtung, die die Reibung zwischen dem Fördermittel und den Stückgütern erhöhen.

Gemäß einer zweiten alternativen Ausführungsform kann auch eine Vergrößerung des Abstands zwischen einer ersten vorbereiteten palettierfähigen Lage, die bereits vollständig in die erste Vorgruppierung überführt worden ist und einer zweiten zumindest teilweise vorbereiteten palettierfähigen Lage erfolgen, indem die Horizontalfördereinrichtung des Gruppiermoduls nach Übertritt einer kompletten Lagenanordnung einer ersten palettierfähigen Lage an Stückgütern zumindest kurzzeitig gegenüber dem nachgeordneten Fördermittel bzw. dem Fördermittel der ersten Vorgruppierung verzögert wird. Vorzugsweise ist in diesem Zusammenhang vorgesehen, das die mindestens eine Zuführungseinrichtung für die Stückgüter zum Gruppiermodul synchron reguliert wird, insbesondere ebenfalls kurzzeitig gegenüber dem Fördermittel (der ersten Vorgruppierung) verzögert wird.

Gemäß einer weiteren Ausführungsform kann vorgesehen sein, dass das nachgeordnete Fördermittel bzw. das Fördermittel der Vorgruppierung zumindest kurzzeitig gegenüber der Fördergeschwindigkeit der Horizontalfördereinrichtung beschleunigt wird und/oder dass die Fördergeschwindigkeit der Horizontalfördereinrichtung zumindest kurzzeitig gegenüber der Geschwindigkeit des Fördermittels verzögert wird. Besonders bevorzugt werden die beiden Geschwindigkeitsänderungen kombiniert. Dabei kann vorgesehen sein, dass die Erhöhung der Geschwindigkeit des Fördermittels gleichzeitig mit der Reduzierung der Fördergeschwindigkeit der Horizontalfördereinrichtung erfolgt. Bei einigen Ausführungsformen kann es vorteilhaft sein, wenn die Änderung der Geschwindigkeiten von Horizontalfördereinrichtung und Fördermittel zeitversetzt erfolgen. Um einen gleichmäßigen Durchsatz zu gewährleisten, sollten die Geschwindigkeiten anschließend immer wieder auf die Ausgangsgeschwindigkeit bzw. allgemeine Betriebsgeschwindigkeit zurückgesetzt werden.

Hierzu ist vorzugsweise eine Steuerungseinheit vorgesehen, die dem Gruppiermodul, der Horizontalfördereinrichtung und/oder der Vorgruppierung, dem Fördermittel und/oder der Zuführeinrichtung zugeordnet ist und die Geschwindigkeiten von Horizontalfördereinrichtung und/oder Fördermittel und/oder Zuführeinrichtung entsprechend steuert, insbesondere die kurzzeitige Geschwindigkeitsänderung und das anschließende Rücksteuern in die normale Ausgangsgeschwindigkeit bzw. Betriebsgeschwindigkeit.

Die Geschwindigkeitsänderung, d.h. die Beschleunigung der Geschwindigkeit des nachgeordneten Fördermittels und/oder die Verzögerung der Fördergeschwindigkeit der Horizontalfördereinrichtung erfolgt vorzugsweise immer dann, wenn durch den Manipulator des Gruppiermoduls eine erste vorbereitete palettierfähige Lage erstellt und diese bereits vollständig in die erste Vorgruppierung überführt worden ist, so dass alle Stückgüter dieser vorbereiteten palettierfähigen Lage zumindest teilweise auf dem Fördermittel der Vorgruppierung angeordnet sind. Auch wenn einige Stückgüter nur bereichsweise auf dem Fördermittel der Vorgruppierung und noch teilweise auf der Horizontalfördereinrichtung angeordnet sind, ist aufgrund der kontinuierlichen Bewegung der Horizontalfördereinrichtung und des Fördermittels in Transsportrichtung sichergestellt, dass sie bei einer oben beschriebenen Geschwindigkeitsänderung der Horizontalfördereinrichtung und/oder des Fördermittels in der definierten Lagenanordnung zu den in Transportrichtung vorauseilenden Stückgütern derselben ersten vorbereiteten palettierfähigen Lage bleiben.

Gemäß einer Ausführungsform wird vor der kurzzeitigen Beschleunigung des nachgeordneten Fördermittels und/oder vor der kurzzeitigen Verzögerung der Horizontalfördereinrichtung erfasst, ob sich Stückgüter einer nachfolgend durch den Manipulator vorbereiteten zweiten palettierfähigen Lage oder einer durch den Manipulator in Vorbereitung befindlichen zweiten palettierfähigen Lage auf dem Fördermittel der Vorgruppierung befinden. Eine entsprechende Geschwindigkeitsänderung des Fördermittels und/oder der Horizontalfördereinrichtung erfolgt nur dann, wenn sich diese Stückgüter der zweiten palettierfähigen Lage noch allesamt auf der Horizontalfördereinrichtung des Gruppiermoduls befinden. Dadurch wird sichergestellt, dass nur eine Beabstandung der Stückgüter jeweils unterschiedlicher palettierfähiger Lagen erfolgt und nicht etwa eine ungewünschte Beabstandung von Stückgütern innerhalb der Lagenanordnung einer palettierfähigen Lage stattfindet. Hierzu ist eine Erfassungseinrichtung vorgesehen, die vorzugsweise Informationen zu den entsprechend durch den Manipulator herzustellenden Lagenanordnungen enthält und diese Information mit der durch die Erfassungseinrichtung erfassten Situation vergleicht. Alternativ können die Informationen zu den entsprechend durch den Manipulator herzustellenden Lagenanordnungen in der bereits beschriebenen Steuerungseinheit gespeichert sein. Die Erfassungseinrichtung ermittelt die erfasste Situation, an die Steuerungseinheit, die einen Vergleich mit den gespeicherten Informationen durchführt und die Horizontalfördereinrichtung und/oder das Fördermittel entsprechend ansteuert oder gegebenenfalls auch einen Anlagenstopp bewirkt. Beispielsweise ist die Erfassungseinrichtung ein bilderkennender Sensor o.ä., der die Daten an die Steuerungseinheit übermittelt.

Vorzugsweise findet in der ersten Vorgruppierung eine erste Verdichtung der durch das Gruppiermodul vorbereiteten palettierfähigen Lage statt. Die Vorgruppierung umfasst beispielsweise ein sich quer zur Transportrichtung erstreckendes erstes Anschlagelement. Insbesondere werden die Stückgüter der vorbereitete palettierfähige Lage, die sich komplett auf dem Fördermittel der ersten Vorgruppierung befinden, durch die Bewegung des Fördermittels in Transportrichtung gegen das erste Anschlagelement geschoben und/oder gedrückt. Dadurch werden die Stückgüter der vorbereiteten palettierfähigen Lage in Transportrichtung zu einer komprimierten palettierfähigen Lage zusammengeschoben.

Das Anschlagelement ist vorzugsweise verstellbar und/oder entfernbar ausgebildet. Beispielsweise kann das Anschlagelement nach oben oder unten oder seitlich weggeschwenkt werden, so dass die komprimierte palettierfähige Lage anschließend in Transportrichtung einer weiteren Verarbeitung, beispielsweise einer zweiten Vorgruppierung, zugeführt werden kann.

Beispielsweise kann das Anliegen der zuvorderst transportierten Stückgüter einer Lage am ersten Anschlagelement sensorisch erfasst werden. Dazu kann ein Sensor direkt am ersten Anschlagelement angeordnet sein. Beispielsweise ist mindestens ein Drucksensor am ersten Anschlagelement angeordnet, der den durch die Stückgüter auf das Anschlagelement ausgeübten Druck ermittelt und die Daten an die Steuerungseinheit übermittelt. Aus der Änderung des Drucks über die Zeit und/oder anhand unterschiedlicher Parameter, beispielsweise der Dauer des Drucks in Verbindung mit der Geschwindigkeit des Fördermittels, der bekannten Länge der Lagenanordnung in Transportrichtung etc., kann beispielsweise berechnet werden, wann die komprimierte palettierfähige Lage fertig ausgebildet ist, damit das Anschlagelement entsprechend entfernt werden kann, um die komprimierte palettierfähige Lage der weiteren Verarbeitung zuzuführen.

Gemäß einer weiteren Ausführungsform der Erfindung kann der mindestens eine Sensor ein bilderkennender Sensor sein, der die Anordnung der Stückgüter erfasst und entsprechende Signale an die Steuerungseinheit übermittelt, die die Daten mit der gewünschten Lagenschema abgleicht und entsprechend das Fördermittel und/oder das Anschlagelement ansteuert, insbesondere kann die Steuerungseinheit die erhöhten Geschwindigkeit des Fördermittels und/oder die reduzierte Fördergeschwindigkeit der Horizontalfördereinrichtung einstellen oder wieder auf die Ausganggeschwindigkeit bzw. Betriebsgeschwindigkeit reduzieren.

Gemäß einer Ausführungsform der Erfindung kann die komprimierte palettierfähige Lage weiterhin quer zur Transportrichtung gesehen Lücken zwischen der Stückgütern aufweisen, die vor der weiteren Verarbeitung, insbesondere der Palettierung o.ä., noch entfernt werden müssen. Hierzu ist beispielsweise eine der ersten Vorgruppierung nachgeordnete zweite Vorgruppierung vorgesehen, bei der das Lagenbild der komprimierten palettierfähige Lage unter Aufhebung der zwischen den Stückgütern befindlichen Lücken in einer Richtung quer zur Transportrichtung zusammengeschoben wird. Die komprimierte palettierfähige Lage wird hierzu in Transportrichtung in die zweite Vorgruppierung überführt. Diese umfasst beispielsweise zwei zweite Anschlagelemente, die parallel zur Transportrichtung ausgerichtet beidseitig zur Transportstrecke angeordnet sind. Durch eine Relativbewegung der beiden zweiten Anschlagelemente quer zur Transportrichtung aufeinander zu, werden die Stückgüter der komprimierten palettierfähige Lage quer zur Transportrichtung zusammengeschoben, bis keine Lücken oder nur noch geringfügige Lücken entsprechend dem herzustellenden Lagenschema vorhanden sind.

Gemäß einer weiteren Ausführungsform der Erfindung können die Lücken innerhalb einer vorbereiteten palettierfähigen Lage in Transportrichtung und die Lücken innerhalb einer vorbereiteten palettierfähigen Lage quer zur Transportrichtung innerhalb eines einzigen Zentrierungsmoduls entfernt werden. Auch in diesem Fall kann vorgesehen sein, dass die Stückgüter der vorbereiteten palettierfähigen Lage in Transportrichtung entfernt werden, in dem die vorbereitete palettierfähige Lage in Transportrichtung gegen ein sich quer zur Transportrichtung erstreckendes erstes Anschlagelement gefahren werden. Zeitgleich oder daran anschließend werden die Lücken quer zur Transportrichtung durch zwei sich seitlich zur Transportstrecke der palettierfähigen Lage und parallel zur Transportrichtung erstreckende zweite Anschlagelemente geschlossen, indem die beiden zweiten Anschlagelemente gegeneinander verfahren werden und dabei die Stückgüter der palettierfähigen Lage quer zur Transportrichtung zusammenschieben. Hierzu muss das Fördermittel des Zentrierungsmoduls entsprechend ausgebildet sein. Insbesondere muss eine Bewegung der Stückgüter relativ zum Fördermittel und quer zur Transportrichtung möglich sein, während eine Bewegung der Stückgüter relativ zum Fördermittel und in Transportrichtung vorzugsweise nicht möglich ist. Dies ist beispielsweise bei Fördermitteln gegeben, deren Förderfläche durch erhöhte parallele Stege quer zur Transportrichtung gebildet wird.

Gemäß verschiedener mit dem Gruppiermodul durchzuführender Verfahren zum Anordnen der Stückgüter in definierten Lagenschemata bzw. Lagenanordnungen wird auf die Anmeldung mit dem Aktenzeichen DE 10 2016 206 639.0 verwiesen.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine seitliche Darstellung einer Ausführungsvariante einer erfindungsgemäßen Lagenbildungs- und Palettiervorrichtung 1, die im Zusammenhang mit den weiteren Figuren aufeinanderfolgende Abläufe eines erfindungsgemäßen Verfahrens zur Handhabung von Stückgütern, Artikeln und/oder Gebinden verdeutlichen kann.
Fig. 2 zeigt eine Lagenbildungs- und Palettiervorrichtung gemäß Fig. 1 von oben.
Fig. 3 zeigt das Vorbereiten einer palettierfähigen Lage innerhalb eines Gruppiermoduls.
Fig. 4 zeigt das Überführen einer vorbereiteten palettierfähigen Lage vom Gruppiermodul zu einer ersten Vorgruppierung.
Fig. 5 zeigt den Verfahrensschritt einer Beabstandung einer vorbereiteten palettierfähigen Lage von einer nachfolgenden im Gruppiermodul zu erstellenden vorbereiteten palettierfähigen Lage innerhalb der ersten Vorgruppierung.
Figuren 6 bis 9 zeigen schematisch das Fertigstellen einer palettierfähigen Lage vermittels einer ersten und einer zweiten Vorgruppierung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

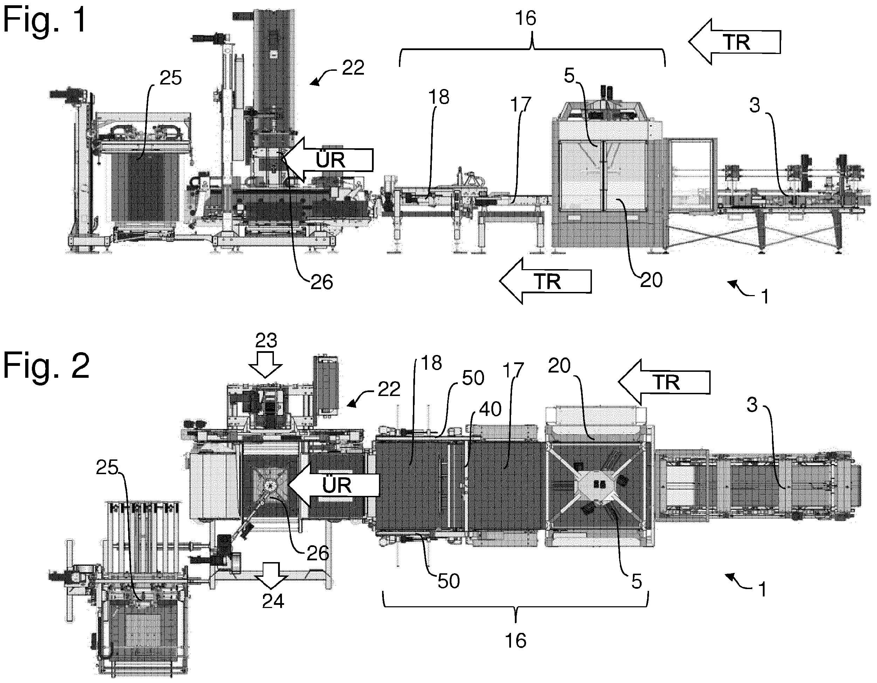

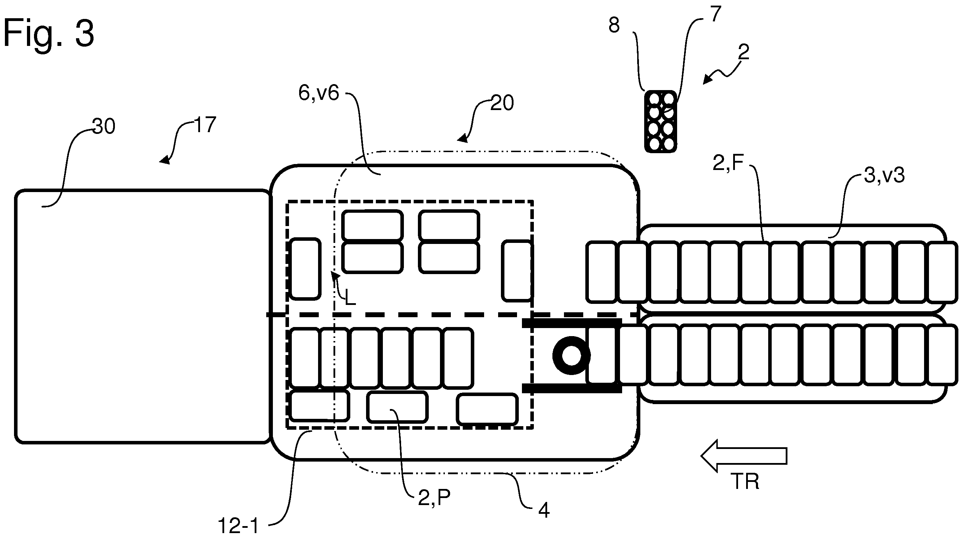

Die schematische Ansicht der Fig. 1 zeigt eine seitliche Darstellung einer Lagenbildungs- und Palettiervorrichtung 1. Die schematische Draufsicht der Fig. 2 zeigt eine Darstellung der Palettiervorrichtung 1 von oben. Zuerst werden gemäß den Darstellungen der Figuren 1 und 2 noch nicht näher dargestellte Stückgüter zu einer zu palettierenden Lage zusammengestellt (siehe hierzu die Figuren 3 bis 5). Beispielsweise werden Gebinde, umfassend jeweils eine Mehrzahl von Getränkebehältern, die durch eine Umverpackung in Form einer Schrumpffolie oder einer Umreifung o.ä. zusammengehalten werden, über eine Zuführeinrichtung 3, beispielsweise in Gestalt einer geeigneten Fördervorrichtung, in Transportrichtung TR einem Lagenvorbereitungs- und Lagenbereitstellungsmodul 16 zugeführt. Das Lagenvorbereitungs- und Lagenbereitstellungsmodul 16 umfasst ein Gruppiermodul 20, in dem die Stückgüter durch mindestens einen sich innerhalb eines definierten Bewegungsraumes bewegenden geeigneten Manipulator 5 o.ä. gemäß einem gewünschten und/oder vorgegebenen Lagenschema als vorbereitete palettierfähige Lage zusammengestellt werden.

Das Gruppiermodul 20 kann beispielsweise durch eine Vorrichtung zum Umgang mit in mindestens einer Reihe hintereinander bewegten Stückgütern gebildet sein, wie sie in den Patentanmeldungen mit den Aktenzeichen DE 10 2016 206 639.0 und DE 10 2016 213 400.0 beschrieben ist. Eine solche Vorrichtung kann in einer Reihe lückenlos zugeführte Stückgüter, beispielsweise lückenlos zugeführte Gebinde, jeweils umfassend eine Mehrzahl von durch eine Umverpackung zusammengefassten Artikeln, bearbeiten. Zudem ist eine solche Vorrichtung auch geeignet, in einer Reihe definiert zueinander beabstandete Stückgüter ebenfalls zu bearbeiten und gemäß einem gewünschten und/oder vorgegebenen Lagenschema als palettierfähige Lage zusammenzustellen.

Die Zuführung der Stückgüter zu einem Manipulator 5 des Gruppiermoduls 20 erfolgt beispielsweise über eine Transporteinrichtung bzw. Zuführeinrichtung 3 mit wenigstens zwei sich in einer Transportrichtung aneinander anschließenden Transportabschnitten, wobei der erste Transportabschnitt beispielsweise durch eine Röllchenbandkette o. dgl. gebildet wird, und wobei der zweite Transportabschnitt bspw. aus einem Förderband mit einer haftenden Oberfläche wie etwa einem gummierten Förderband gebildet wird. Eine solche Transporteinrichtung wird in der Patentanmeldung mit dem Aktenzeichen DE 10 2017 207 353.5 beschrieben.

Der mindestens eine Manipulator 5 des Gruppiermoduls 20 definiert und bildet innerhalb des Gruppiermoduls 20 den Takt der jeweils zu bearbeitenden Stückgüter, indem er die entsprechende Anzahl an Stückgütern aus der in mindestens einer Reihe lückenlos einlaufenden Stückgüter abgreift. Der Manipulator 5 wird beispielsweise durch einen Deltakinematik-Roboter gebildet, der zum Greifen, Freigeben und Drehen von Produkten eine erste Welle und eine zweite Welle aufweist. Insbesondere kann der Manipulator 5 an einer Linearführung drehfest angeflanscht sein, wobei die Linearführung als erste Welle ausgebildet ist, so dass der Manipulator 5 über die erste Welle bzw. die Linearführung gedreht werden kann. Die zweite Welle bildet eine Betätigungseinrichtung, mittels welcher Klemmbacken des Manipulators 5 zum Schließen und Öffnen angesteuert werden können. Die Drehachsen der ersten Welle sowie der zweiten Welle können zusammenfallen bzw. identisch sein, wobei die beiden Wellen koaxial zueinander orientiert bzw. angeordnet sein können. Die erste Welle kann vorzugsweise durch ein Hohlrohr gebildet sein, wobei die zweite Welle in dem Hohlraum der ersten Welle angeordnet ist.

Wahlweise kann der mindestens eine Manipulator 5 im Gruppiermodul 20 jedoch auch durch einen Portalroboter, durch einen Mehrachsroboter oder durch eine andere geeignete Greif- und/oder Manipulationseinrichtung gebildet sein, die in der Lage ist, in schneller Folge die heranbeförderten Stückgüter zu greifen, zu drehen, zu verschieben, anzuheben, freizugeben etc., so dass die gewünschten Lagenbilder erzeugbar sind.

Die durch eine entsprechende Handhabung der Stückgüter innerhalb des Gruppiermoduls 20 vorbereitete palettierfähige Lage kann noch Lücken zwischen den Stückgütern aufweisen, die vor der Palettierung zumindest teilweise geschlossen werden sollten, da es aus Stabilitätsgründen sowie aus Gründen der Platzersparnis nicht sinnvoll ist, nicht komplett zusammengeschobene Lagen zu palettieren. Um die Lücken zwischen den einzelnen Stückgütern zu beseitigen, wird die innerhalb des Gruppiermoduls vorbereitete palettierfähige Lage in Transportrichtung TR nacheinander einer ersten Vorgruppierung 17 und einer zweiten Vorgruppierung 18 zugeführt, wo die Stückgüter der vorbereiteten palettierfähigen Lage unter Aufhebung der zwischen den Stückgütern noch bestehenden Lücken zusammengeschoben werden und somit die gewünschte fertige palettierfähigen Lage erzeugt wird; diese Lage bzw. palettierfähige Lage wird nachfolgend auch als fertige bzw. geschlossene Lage bezeichnet.

Insbesondere ist vorgesehen, dass die Stückgüter der durch das Gruppiermodul 20 vorbereiteten palettierfähigen Lage in der ersten Vorgruppierung 17 in Transportrichtung TR gegen ein sich quer zur Transportrichtung erstreckendes erstes Anschlagelement 40 geschoben werden, so dass durch die Bewegung der Stückgüter in Transportrichtung TR erste Lücken zwischen den Stückgütern der vorbereiteten palettierfähigen Lage geschlossen werden und eine sogenannte komprimierte palettierfähige Lage gebildet wird. In der sich daran anschließenden zweiten Vorgruppierung 18 werden sich beidseitig parallel zur Transportrichtung erstreckende zweite Anschlagelemente 50 aufeinander zu bewegt, so dass zweite Lücken zwischen den Stückgütern der komprimierten palettierfähigen Lage quer zur Transportrichtung TR geschlossen und beseitigt werden können.

Die vermittels der ersten und zweiten Vorgruppierung erzeugte fertige bzw. geschlossene palettierfähige Lage wird von der zweiten Vorgruppierung 18 in Überschubrichtung ÜR in eine Beladestation 22 übergeschoben. Eine entsprechende Beladestation wird bspw. in der Patentanmeldung mit dem Aktenzeichen DE 10 2017 208 753.6 beschrieben. Die palettierfähige Lage wird auf eine Palette bzw. auf mindestens eine Oberseite einer auf einer Palette angeordneten weiteren palettierfähigen Lage angeordnet. Die hierzu notwendige Palette (nicht dargestellt) wird in Palettenzuführungsrichtung 23 in die Beladestation 22 eingeführt und in Palettenabtransportrichtung 24 aus der Beladestation 22 entfernt. Die Palettenzuführungsrichtung 23 und die Palettenabtransportrichtung 24 sind vorzugsweise geradlinig in einer Flucht und quer zur Überschubrichtung ÜR der palettierfähigen Lage innerhalb der Beladestation 22 ausgebildet.

Weiterhin umfasst die Lagenbildungs- und Palettiervorrichtung 1 vorzugsweise einen sog. Zwischenlagen-Vorseparierer 25 inklusive Magazin für Zwischenlagen und Zentriereinheit zum zentrierten Ausrichten der Zwischenlage zu der jeweiligen palettierfähigen Lage. Weiterhin kann der Beladestation 22 ein Zwischenlagen-Einleger 26 zugeordnet sein, um zwischen den aufeinander zu stapelnden palettierfähigen Lagen jeweils eine Zwischenlage, beispielsweise aus einem Kartonzuschnitt o.ä., zum Schutz der jeweiligen unteren palettierfähigen Lage anzuordnen. Wahlweise können auch zunächst zwei Lagen aufeinandergestapelt werden, bevor eine darauf abzulegende dritte Lage mit einer solchen Zwischenlage von der Oberseite der zweiten Lage getrennt wird. In diesem Fall werden bspw. paarweise Lagenstapel gebildet, die jeweils in Paaren aufeinander folgender Lagen durch Zwischenlagen voneinander getrennt werden. Auch andere Trennungssystematiken mittels solcher Zwischenlagen sind denkbar, sind hier jedoch nicht näher erläutert.

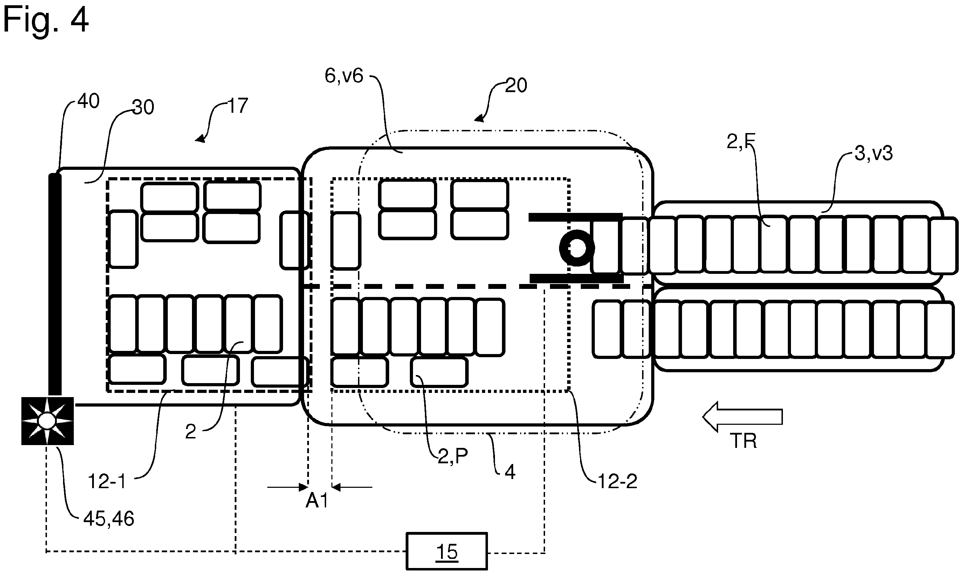

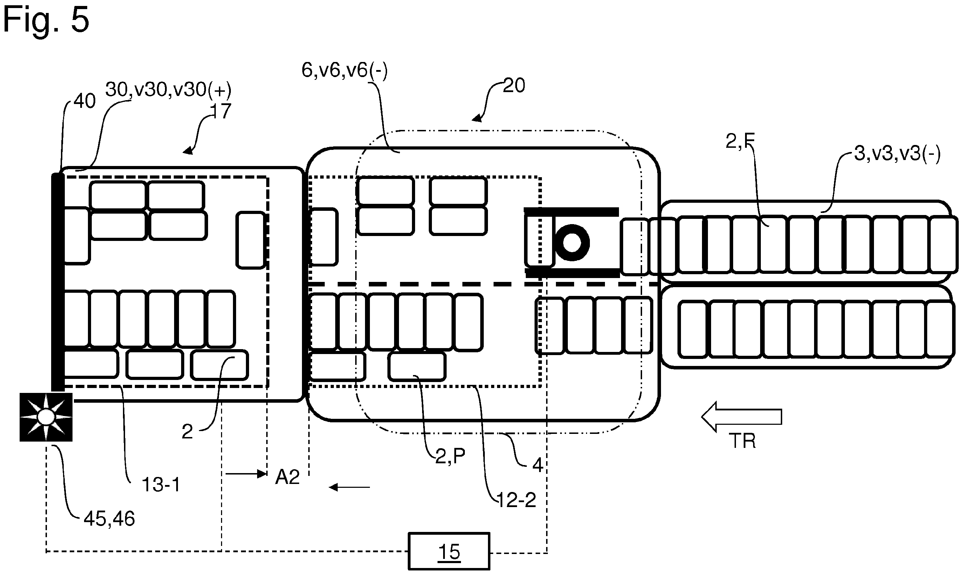

Die schematische Draufsicht der Fig. 3 zeigt das Vorbereiten einer ersten palettierfähigen Lage 12-1 innerhalb des Gruppiermoduls 20. Die schematische Draufsicht der Fig. 4 zeigt das Überführen der vorbereiteten palettierfähigen Lage 12-1 vom Gruppiermodul 20 zur ersten Vorgruppierung 17. Die schematische Draufsicht der Fig. 5 verdeutlicht das Beabstanden der vorbereiteten palettierfähigen Lage 12-1 von einer nachfolgenden im Gruppiermodul 20 zu erstellenden vorbereiteten palettierfähigen Lage 12-2 innerhalb der ersten Vorgruppierung 17.

Im dargestellten Ausführungsbeispiel werden in zwei parallelen Reihen hintereinander bewegte Stückgüter 2 über zwei Transporteinrichtungen 3 dem Gruppiermodul 20 zugeführt. Es wäre auch denkbar, die beiden Reihen an Stückgütern 2 auf einer gemeinsamen Zuführeinrichtung zu transportieren. Dabei sind vorzugsweise zwischen den Stückgütern 2 jeder Reihe jeweils keine Abstände ausgebildet, d.h. die Stückgüter 2 werden in geschlossener Formation F dem Gruppiermodul 20 zugeführt. Bei den Stückgütern 2 handelt es sich beispielsweise um Gebinde aus einer Mehrzahl von Artikeln, beispielsweise Flaschen 7 oder Getränkebehälter, die durch eine Umverpackung, insbesondere eine Schrumpffolie 8, zusammengefasst sind.

Das Gruppiermodul 20 umfasst eine Horizontalfördereinrichtung 6, auf der die Stückgüter 2 in Transportrichtung TR vorzugsweise mit einer konstanten Fördergeschwindigkeit v6 transportiert werden. Insbesondere entspricht die Fördergeschwindigkeit v6 der Zuführgeschwindigkeit v3 der Transporteinrichtungen 3. Innerhalb des Gruppiermoduls 20 ist mindestens ein Manipulator 5 angeordnet, der einen Bearbeitungs- und/oder Erfassungsbereich 4 abdeckt. Wie durch die gestrichelte Linie angedeutet wird, kann die Horizontalfördereinrichtung 6 auch durch mehrere parallel angeordnete Förderbänder gebildet werden, die vorzugsweise synchron und insbesondere alle mit der Fördergeschwindigkeit v6 betrieben werden.

Aus den einlaufenden Stückgütern 2 wird durch den Manipulator 5 des Gruppiermoduls 20 innerhalb des Bearbeitungs- oder Erfassungsbereiches 4 innerhalb eines bestimmten Zeitraumes jeweils wenigstens ein transportiertes Stückgut 2 klemmend und/oder kraftschlüssig und/oder formschlüssig erfasst, räumlich abgetrennt und gemäß einem gewünschten Lagenschema in eine definierte relative Zielposition und/oder Zielausrichtung P gegenüber nachfolgend in das Gruppiermodul 20 einlaufenden Stückgütern 2 gebracht. Wenn im Zusammenhang der vorliegenden Erfindung von einer klemmenden Erfassung von Stückgütern 2 die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern 2. Alle diese Varianten des Aufnehmens, Erfassens und/oder Greifens von Stückgütern 2 können gleichermaßen mit einem formschlüssigen Erfassen, Greifen bzw. Aufnehmen der Stückgüter 2 kombiniert sein. Wenn im Zusammenhang der vorliegenden Erfindung von einer Zielposition P und/oder Zielausrichtung die Rede ist, so kann dies insbesondere bedeuten, dass die Stückgüter 2 erfasst, verschoben und/oder gedreht werden können, wobei die Stückgüter 2 wahlweise auch nur verschoben (ohne Drehung) bzw. nur gedreht (ohne Verschiebebewegung) werden können.

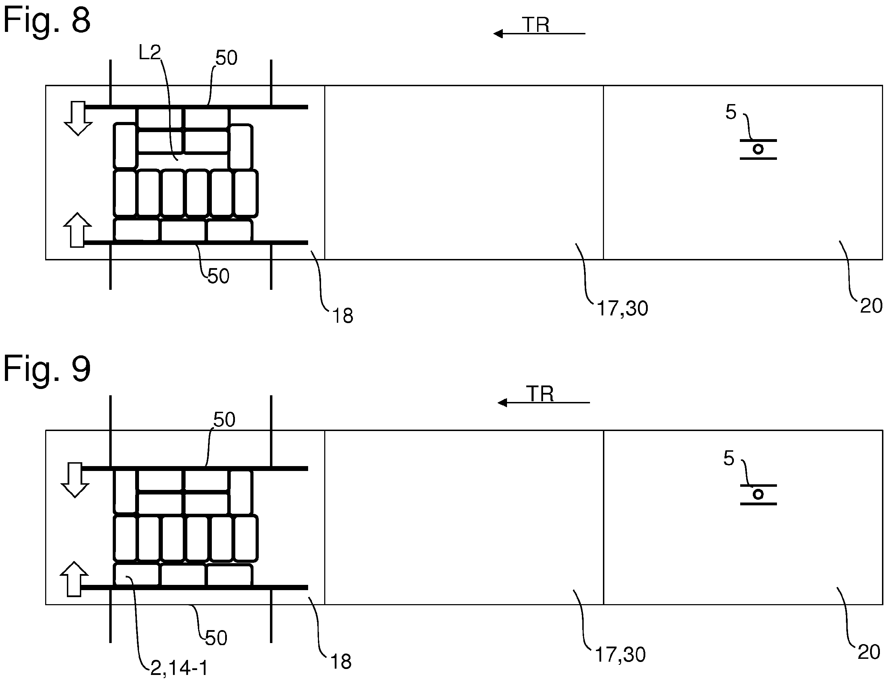

Im Gruppiermodul 20 werden die Stückgüter 2 durch den Manipulator 5 gemäß einem vorgegebenen Lagenschema angeordnet und/oder ausgerichtet, wobei normalerweise innerhalb der dabei erzeugten vorbereiteten palettierfähigen Lage 12-1 mit einer Mehrzahl von in der Lage 12-1 angeordneten Stückgütern 2 noch Lücken L jeweils unterschiedlicher oder oftmals auch gleicher Größe zwischen den Stückgütern 2 ausgebildet sind oder sein können, die noch entfernt werden müssen, bevor die fertige bzw. geschlossene palettierfähige Lage (vgl. Fig. 9) durch die Beladestation 22 (vgl. die Figuren 1 und 2) auf einer Palette angeordnet werden kann.

Die erste Vorgruppierung 17 umfasst vorzugsweise ein Fördermittel 30, das in einer Flucht zur Horizontalfördereinrichtung 6 des Gruppiermoduls 20 sowie in gleichem horizontalem Niveau angeordnet ist. Dieses wird mit einer Geschwindigkeit v30 in Transportrichtung TR bewegt, wobei die Fördergeschwindigkeit v30 des dem Gruppiermodul 20 nachgeordneten Fördermittels 30 der Vorgruppierung 17 in aller Regel der Fördergeschwindigkeit v6 der Horizontalfördereinrichtung 6 des Gruppiermoduls 20 entspricht.

Allerdings sieht die vorliegende Erfindung vor, dass das Fördermittel 30 kurzzeitig gegenüber der Fördergeschwindigkeit v6 beschleunigt wird und/oder dass die Fördergeschwindigkeit v6 gegenüber der Geschwindigkeit v30 des Fördermittels 30 kurzzeitig verzögert wird. Diese Beschleunigung der Geschwindigkeit v30 erfolgt immer dann, wenn durch den Manipulator 5 des Gruppiermoduls 20 eine vorbereitete palettierfähige Lage 12-1 erstellt und diese bereits vollständig in die erste Vorgruppierung 17 überführt worden ist, so dass alle Stückgüter 2 der vorbereiteten palettierfähigen Lage 12-1 zumindest teilweise auf dem Fördermittel 30 der Vorgruppierung 17 angeordnet sind (Fig. 4).

Eine weitere Voraussetzung für die kurzzeitige Beschleunigung des Fördermittels 30 ist zudem, dass sich noch keine Stückgüter 2 einer nachfolgend durch den Manipulator 5 vorbereiteten zweiten palettierfähigen Lage 12-2 auf dem Fördermittel 30 der Vorgruppierung 17 befinden, sondern dass diese Stückgüter noch allesamt auf der Horizontalfördereinrichtung 6 des Gruppiermoduls 20 angeordnet sind.

Wie dies in der schematischen Draufsicht der Fig. 4 deutlich zu erkennen ist, erfolgt nach Abschluss des Vorbereitens einer ersten palettierfähigen Lage 12-1 innerhalb des Gruppiermoduls 20 direkt das Vorbereiten einer zweiten palettierfähigen Lage 12-2. Zwischen den beiden palettierfähigen Lagen 12-1, 12-2 ist in Transportrichtung TR anfänglich nur ein geringer erster Abstand A1 ausgebildet.

Durch die kurzzeitige Beschleunigung des Fördermittels 30 wird - wie in Fig. 5 dargestellt - die erste vorbereitete palettierfähige Lage 12-1 von der sich noch komplett innerhalb des Gruppiermoduls 20 befindlichen nachfolgend vorbereiteten zweiten palettierfähigen Lage 12-2 weiter beabstandet; insbesondere wird dabei ein vergrößerter zweiter Abstand A2 zwischen der ersten vorbereiteten palettierfähigen Lage 12-1 und der zweiten in Vorbereitung befindlichen palettierfähige Lage 12-2 ausgebildet. Die erste vorbereitete palettierfähige Lage 12-1 befindet sich nunmehr komplett auf dem Fördermittel 30 der ersten Vorgruppierung und wird insbesondere durch die Bewegung in Transportrichtung TR gegen ein sich quer zur Transportrichtung TR erstreckendes erstes Anschlagelement 40 gedrückt, wodurch die Stückgüter 2 der Lage 12-1 in Transportrichtung TR zu einer ersten komprimierten palettierfähigen Lage 13-1 zusammengeschoben werden. Das Anschlagelement 40 kann variabel in den Transportweg gehoben oder abgesenkt werden, so dass die Stückgüter 2 der Lage 12-1 dagegen geschoben und die Lage 13-1 gebildet werden kann, wonach das Anschlagelement 40 zum Überführen der komprimierten Lage 13-1 in die folgenden Stationen in Transportrichtung TR angehoben oder abgesenkt werden kann.

Durch die kurzzeitige Beschleunigung des Fördermittels 30 gegenüber der Fördergeschwindigkeit v6 der Horizontalfördereinrichtung des Gruppiermoduls 20 auf eine erhöhte Geschwindigkeit v30(+) wird ein Versatz zwischen den zwei vorbereiteten bzw. in Vorbereitung befindlichen palettierfähigen Lagen 12-1 und 12-2 erzeugt. Bei der Bearbeitung von Gebinden, umfassend jeweils eine Mehrzahl von durch eine Umverpackung zusammengefasste Artikel oder Flaschen, wird vorzugsweise ein zweiter Abstand A2 von circa 100mm erzeugt.

Der vergrößerte zweite Abstand A2 zwischen den beiden palettierfähigen Lagen 12-1 und 12-2 führt zu einer erhöhten Prozesssicherheit, da nunmehr mit Hilfe des ersten Anschlagelementes 40 innerhalb der ersten Vorgruppierung 17 aus der ersten vorbereiteten palettierfähigen Lage 12-1 eine erste komprimierte palettierfähige Lage 13-1 erzeugt werden kann, während gleichzeitig durch den Manipulator 5 innerhalb des Gruppiermoduls 20 das Vorbereiten der zweiten palettierfähigen Lage 12-2 erfolgen kann.

Der erhöhte Abstand A2 ist insbesondere notwendig, um die einzelnen jeweils durch die Vorgruppierung komprimierten Lagen 13-1 etc. in der sich anschließenden zweiten Vorgruppierung 18 (vgl. die Figuren 1, 2 und 6 bis 9) durch Zusammenschieben vermittels zweier zweiter Anschlagelemente 50, die sich parallel zur Transportrichtung TR erstreckend angeordnet sind, zu jeweils fertigen, insbesondere geschlossenen, palettierfähigen Lagen (14-1) fertigzustellen, insbesondere gemäß dem gewünschten Lagenbild zusammenzuschieben. Hierbei dürfen nur die Stückgüter 2 einer ersten vorbereiteten palettierfähigen Lage 12-1 gegen das erste Anschlagelement 40 der ersten Vorgruppierung 17 gedrückt werden, und es darf zu keiner Vermischung mit Stückgütern 2 der nachfolgenden zweiten vorbereiteten palettierfähigen Lage 12-2 kommen.

Weiterhin kann vorgesehen sein, dass vermittels mindestens eines Sensors 45 ermittelt wird, ob und/oder wann die ersten Stückgüter 2 der vorbereiteten palettierfähigen Lage 12-1 am ersten Anschlagelement 40 anliegen. Dies kann beispielsweise über bilderkennende Sensoren oder über mindestens einen am ersten Anschlagelement 40 angeordneten Drucksensor 46 o. dgl. erfolgen. Sobald der Sensor 45 bzw. 46 ein entsprechendes Signal, insbesondere in entsprechender Höhe o.ä., an eine Steuerungseinheit 15 übermittelt, kann die erhöhte Geschwindigkeit v30(+) wieder auf die Ausgangsgeschwindigkeit v30 des Fördermittels 30 der ersten Vorgruppierung 17 reduziert werden.

Anhand der Figuren 3 bis 5 wird nachfolgend eine weitere, zweite Ausführungsform der Geschwindigkeitsvariationen der Fördereinrichtungen beschrieben. Um den vergrößerten Abstand A2 zwischen der ersten vorbereiteten palettierfähigen Lage 12-1 und der zweiten vorbereiteten palettierfähigen Lage 12-2 zu erzeugen, kann auch vorgesehen sein, dass die Fördergeschwindigkeit v6 der Horizontalfördereinrichtung 6 des Gruppiermoduls 20 und die Zuführgeschwindigkeit v3 der die Stückgüter 2 zuführenden mindestens einen Transporteinrichtung 3 kurzzeitig gegenüber einer konstanten Geschwindigkeit v30 des Fördermittels 30 der Vorgruppierung 17 auf reduzierte Fördergeschwindigkeit v6(-) und reduzierte Zuführgeschwindigkeit v3(-) reduziert werden. Nachdem der gewünschte Abstand A2 zwischen den beiden vorbereiteten palettierfähigen Lagen 12-1 und 12-2 erzeugt worden ist, werden die reduzierte Fördergeschwindigkeit v6(-) und die reduzierte Zuführgeschwindigkeit v3(-) wieder angehoben und insbesondere an die konstante Geschwindigkeit v30 angepasst, um einen kontinuierlich hohen Durchsatz an Stückgütern 2 durch das Gruppiermodul 20 bzw. die Lagenbildungs- und Palettiervorrichtung 1 zu gewährleisten. Es gelten hierbei die oben anhand der ersten Ausführungsform beschriebenen Voraussetzungen.

Gemäß einer dritten Ausführungsform kann auch vorgesehen sein, die Geschwindigkeit v30 des Fördermittels 30 der Vorgruppierung 17 kurzzeitig auf eine erhöhte Geschwindigkeit v30 zu bringen und zeitgleich die Zuführgeschwindigkeit v3 und die Fördergeschwindigkeit v6 zu reduzieren, um den gewünschten vergrößerten zweiten Abstand A2 zu erzeugen. Auch bei dieser Ausführungsform müssen die geänderten Geschwindigkeiten v3(-), v6(-)und v30(+) anschließend wieder auf die Ausgangsgeschwindigkeiten v3, v6 und v30 gebracht werden, um einen kontinuierlich hohen Durchsatz an Stückgütern 2 durch das Gruppiermodul 20 bzw. die Lagenbildungs- und Palettiervorrichtung 1 zu gewährleisten.

Das Fördermittel 30 der ersten Vorgruppierung 17 kann beispielsweise ein gummiertes Endlosförderband oder eine Mattenkette sein, wobei die Auflagefläche der Mattenkette für die Stückgüter 2 vorzugsweise Stege aufweist, um die Reibung in Transportrichtung zu erhöhen und um ein Verrutschen der Stückgüter 2 zu verhindern. Vorzugsweise erstrecken sich die Stege quer zur Transportrichtung. In diesem Fall kann gegebenenfalls auf eine zweistufige Vorgruppierung verzichtet werden und das seitliche Zusammenschieben der vorbereiteten palettierfähigen Lage 12-1 durch parallel zur Transportrichtung TR angeordnete, gegeneinander bewegliche zweite Anschlagelemente kann zeitgleich mit am Zusammenschieben der vorbereiteten palettierfähigen Lage 12-1 in Transportrichtung gegen das erste Anschlagelement 40 erfolgen.

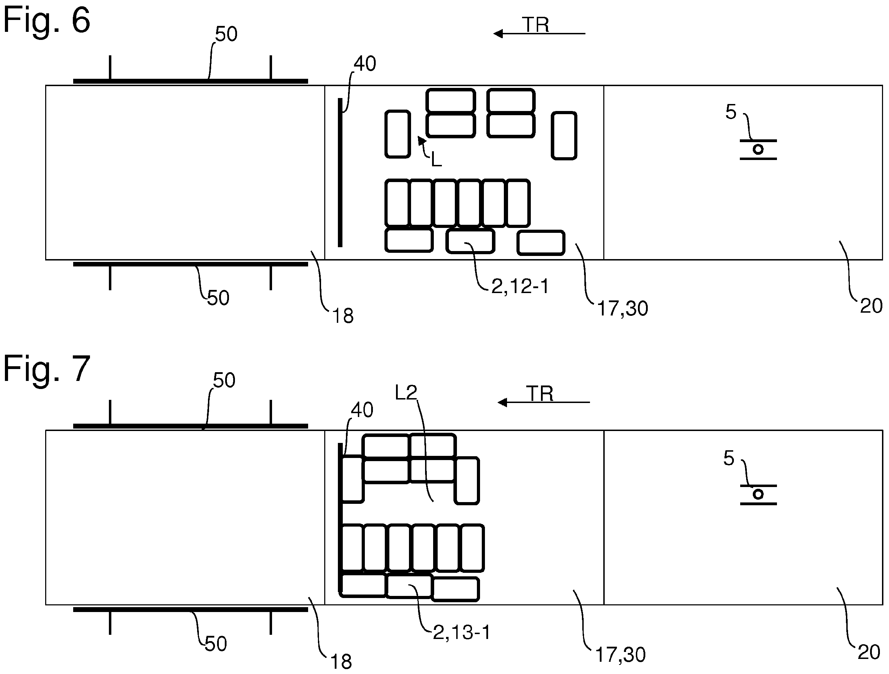

Die Figuren 6 bis 9 zeigen schematisch das Fertigstellen einer geschlossenen palettierfähigen Lage 14-1 vermittels einer ersten Vorgruppierung 17 und einer zweiten Vorgruppierung 18.

Im Gruppiermodul 20 werden die Stückgüter 2 durch den Manipulator 5 gemäß einem vorgegebenen Lagenschema angeordnet und/oder ausgerichtet, wobei normalerweise innerhalb der dabei erzeugten vorbereiteten palettierfähige Lage 12-1 mit einer Mehrzahl von in der Lage 12-1 angeordneten Stückgütern 2 noch Lücken L jeweils unterschiedlicher oder oftmals auch gleicher Größe zwischen den Stückgütern 2 ausgebildet sind oder sein können, die noch entfernt werden müssen, bevor die fertige palettierfähige Lage 14-1 (vgl. Fig. 9) auf einer Palette angeordnet werden kann.

Die innerhalb des Gruppiermoduls 20 vorbereitete palettierfähige Lage 12-1 wird in Transportrichtung TR in die erste Vorgruppierung 17 überführt und insbesondere gegen ein sich quer zur Transportrichtung TR erstreckendes erstes Anschlagelement 40 geführt. Insbesondere werden die Stückgüter 2 der vorbereiteten palettierfähigen Lage 12-1 durch die Bewegung des Fördermittels 30 der ersten Vorgruppierung 17 in Transportrichtung TR gegen das erste Anschlagelement 40 geschoben und/oder gedrückt, wodurch die Stückgüter 2 der vorbereiteten palettierfähigen Lage 12-1 in Transportrichtung TR zu einer komprimierten palettierfähigen Lage 13-1 zusammengeschoben werden (vgl. Fig. 7). Die komprimierte palettierfähige Lage 13-1 weist immer noch quer zur Transportrichtung TR gesehen Lücken L2 zwischen der Stückgütern 2 auf.

Das Anschlagelement 40 wird anschließend nach oben oder unten oder seitlich weggeschwenkt und die komprimierte palettierfähige Lage 13-1 wird in Transportrichtung TR der zweiten Vorgruppierung 18 zugeführt (vgl. Fig. 8), die insbesondere dazu dient, die verbleibenden Lücken L2 quer zur Transportrichtung TR zu schließen. Insbesondere wird in der zweiten Vorgruppierung 18 das Lagenbild der komprimierten palettierfähige Lage 13-1 unter Aufhebung der zwischen den Stückgütern 2 befindlichen Lücken L2 in einer Richtung quer zur Transportrichtung TR zusammengeschoben.

Die Vorgruppierung 18 umfasst zwei zweite Anschlagelemente 50, die parallel zur Transportrichtung TR ausgerichtet beidseitig zur Transportstrecke für die Stückgüter 2 angeordnet sind. Durch eine vermittels Pfeilen dargestellte Relativbewegung der beiden zweiten Anschlagelemente 50 quer zur Transportrichtung TR aufeinander zu, werden die Stückgüter 2 der komprimierten palettierfähige Lage 13-1 quer zur Transportrichtung TR zusammengeschoben, bis keine Lücken L2 oder nur noch geringfügige Lücken entsprechend dem herzustellenden Lagenschema zwischen den Stückgütern 2 vorhanden sind. Die dadurch erzeugte fertige oder geschlossene palettierfähige Lage 14-1 kann nunmehr für die Palettierung in die Beladestation 22 (vgl. Figuren 1 und 2) überführt werden.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1: Lagenbildungs- und Palettiervorrichtung
- 2: Stückgut
- 3: Zuführeinrichtung
- 4: Bearbeitungs- oder Erfassungsbereich
- 5: Manipulator
- 6: Horizontalfördereinrichtung
- 7: Flasche
- 8: Schrumpffolie
- 12-1, 12-2: vorbereitete palettierfähige Lage
- 13-1: komprimierte palettierfähige Lage
- 14-3: fertige/geschlossene palettierfähige Lage
- 15: Steuerungseinheit
- 16: Lagenvorbereitungs- und -bereitstellungsmodul
- 17: erste Vorgruppierung
- 18: zweite Vorgruppierung
- 20: Gruppiermodul
- 22: Beladestation
- 23: Palettenzuführungsrichtung
- 24: Palettenabtransportrichtung
- 25: Zwischenlagen-Vorseparierer
- 26: Zwischenlagen-Einleger
- 27: erstes Vorgruppierungsband
- 28: zweites Vorgruppierungsband
- 30: Fördermittel
- 40: erstes Anschlagelement
- 45: Sensor
- 46: Drucksensor
- 50: zweites Anschlagelement

- A1: erster Abstand
- A2: zweiter Abstand
- F: Formation
- L: Lücke
- L2: Lücke50
- TR: Transportrichtung
- v3: Zuführgeschwindigkeit
- v3(-): reduzierte Zuführgeschwindigkeit
- v30: Geschwindigkeit
- v30(+): erhöhte Geschwindigkeit
- v6: Fördergeschwindigkeit
- v6(-): reduzierte Fördergeschwindigkeit

## Patentansprüche

1. Verfahren zur Handhabung von Stückgütern (2) bei und/oder im Zusammenhang mit deren Gruppierung und/oder deren Lagenbildung, insbesondere zum Zwecke der Ausbildung von aus jeweils mehreren Stückgütern (2) bestehenden palettierfähigen Lagen,
- wobei das Verfahren eine ein- oder mehrreihige Förderung der Stückgüter (2) in einer Transportrichtung (TR) in jeweils geschlossener, lückenloser Formation (F) zu einem Gruppiermodul (20) mit wenigstens einer Horizontalfördereinrichtung (6) sowie mindestens einem Manipulator (5) vorsieht,
**dadurch gekennzeichnet, dass**
- die Stückgüter (2) mit dem Manipulator (5) von der wenigstens einen geschlossenen Formation (F) einzeln oder in Gruppen von zwei oder mehr Stückgütern (2) nacheinander erfasst und durch Drehen und/oder Verschieben und/oder Heben in eine definierte Lagenanordnung gebracht werden, bei der noch Lücken zwischen einzelnen Stückgütern (2) vorhanden sind, die vor dem eigentlichen Palettierschritt noch entfernt werden müssen,
- wobei durch den Manipulator (5) wenigstens ein transportiertes Stückgut (2) klemmend erfasst, von der geschlossenen Formation (F) räumlich abgetrennt und in eine definierte relative Zielposition und/oder Zielausrichtung gegenüber nachfolgenden Stückgütern (2) der Formation (F) gebracht wird,
- wonach die in die mit Lücken behaftete Lagenanordnung gebrachten Stückgüter (2) auf ein dem Gruppiermodul (20) nachgeordnetes Fördermittel (30) überführt werden,
- und wobei nach jedem Übertritt einer definierten Anzahl von Stückgütern (2), die einer palettierfähigen Lage (12-1) entspricht und/oder sich in vorgesehener Lagenanordnung befindet, eine zumindest kurzzeitige Geschwindigkeitsdifferenz der Fördergeschwindigkeiten in Transportrichtung (TR) zwischen der Horizontalfördereinrichtung (6) des Gruppiermoduls (20) und dem Gruppiermodul (20) nachgeordneten Fördermittel (30) vorgesehen und/oder hergestellt wird.

2. Verfahren nach Anspruch 1, wobei es sich bei dem Fördermittel (30), welches dem Gruppiermodul (20) nachgeordnet ist, um ein solches einer nachgeordneten ersten Vorgruppierung (17) handelt.

3. Verfahren nach Anspruch 1 oder 2, bei dem das nachgeordnete Fördermittel (30) nach Übertritt einer kompletten palettierfähigen Lage (12-1) von Stückgütern (2) zumindest kurzzeitig gegenüber der Horizontalfördereinrichtung (6) des Gruppiermoduls (20) beschleunigt wird, wodurch die Stückgüter (2) der in die Vorgruppierung (17) übergetretene palettierfähige Lage (12-1) von den Stückgütern (2) der noch im Gruppiermodul (6) befindlichen nachfolgenden Lage (12-2) beabstandet werden.

4. Verfahren nach Anspruch 1 oder 2, bei dem die Horizontalfördereinrichtung (6) des Gruppiermoduls (20) nach Übertritt einer kompletten Lagenanordnung an Stückgütern (2) zumindest kurzzeitig gegenüber dem nachgeordneten Fördermittel (30) der ersten Vorgruppierung (17) verzögert wird, wodurch die in die Vorgruppierung (17) übergetretene palettierfähige Lage (12-1) von den Stückgütern (2) der noch im Gruppiermodul (6) befindlichen nachfolgenden Lage (12-2) beabstandet wird.

5. Verfahren nach einem der Ansprüche 3 oder 4, bei dem das nachgeordnete Fördermittel (30) der Vorgruppierung (17) zumindest kurzzeitig gegenüber der Fördergeschwindigkeit (v6) der Horizontalfördereinrichtung (6) des Gruppiermoduls (20) beschleunigt wird, und/oder bei dem die Fördergeschwindigkeit (v6) der Horizontalfördereinrichtung (6) des Gruppiermoduls (20) zumindest kurzzeitig gegenüber der Geschwindigkeit (v30) des nachgeordneten Fördermittels (30) der Vorgruppierung (17) verzögert wird.

6. Verfahren nach einem der Ansprüche 3 bis 5, bei dem die Beschleunigung der Geschwindigkeit (v30) des nachgeordneten Fördermittels (30) und/oder die Verzögerung der Fördergeschwindigkeit (v6) der Horizontalfördereinrichtung (6) immer dann erfolgt, wenn durch den Manipulator (5) des Gruppiermoduls (20) eine vorbereitete palettierfähige Lage (12-1) erstellt und diese in die erste Vorgruppierung (17) überführt worden ist, so dass alle Stückgüter (2) der vorbereiteten palettierfähigen Lage (12-1) zumindest teilweise auf dem Fördermittel (30) der Vorgruppierung (17) angeordnet sind.

7. Verfahren nach einem der Ansprüche 1 bis 6, bei dem vor einer kurzzeitigen Beschleunigung des nachgeordneten Fördermittels (30) und/oder vor einer kurzzeitigen Verzögerung der Horizontalfördereinrichtung (6) erfasst wird, ob sich Stückgüter (2) einer nachfolgend durch den Manipulator (5) vorbereiteten zweiten palettierfähigen Lage (12-2) oder einer durch den Manipulator (5) in Vorbereitung befindlichen zweiten palettierfähigen Lage (12-2) auf dem Fördermittel (30) der Vorgruppierung (17) befinden, und dass eine kurzzeitige Beschleunigung des Fördermittels (30) und/oder eine kurzzeitige Verzögerung der Horizontalfördereinrichtung (6) nur dann erfolgt, wenn diese Stückgüter (2) der zweiten palettierfähigen Lage (12-2) noch allesamt auf der Horizontalfördereinrichtung (6) des Gruppiermoduls (20) angeordnet sind.

8. Verfahren nach einem der Ansprüche 1 bis 7, bei dem eine vorbereitete palettierfähige Lage (12-1), die sich komplett auf dem Fördermittel (30) der ersten Vorgruppierung (17) befindet, durch die Bewegung in Transportrichtung (TR) gegen ein sich quer zur Transportrichtung (TR) erstreckendes erstes Anschlagelement (40) geschoben und/oder gedrückt wird, wodurch die Stückgüter (2) der vorbereiteten palettierfähigen Lage (12-1) in Transportrichtung (TR) zu einer komprimierten palettierfähigen Lage (13-1) zusammengeschoben werden.

9. Verfahren nach einem der Ansprüche 1 bis 8, bei dem das Anliegen der zuvorderst transportierten Stückgüter (2) einer vorbereiteten palettierfähigen Lage (12-1) am ersten Anschlagelement (40) sensorisch erfasst wird.

10. Verfahren nach Anspruch 9, bei dem der Sensor (45) entsprechende Signale an eine Steuerungseinheit (15) übermittelt, welche die erhöhten Geschwindigkeiten (v30(+)) des Fördermittels (30) der Vorgruppierung (17) auf die anfängliche Geschwindigkeit (v30) des Fördermittels (30) der ersten Vorgruppierung (17) reduziert und/oder welche die Fördergeschwindigkeit (v6(-)) der Horizontalfördereinrichtung (6) des Gruppiermoduls (20) auf die anfängliche Fördergeschwindigkeit (v6) der Horizontalfördereinrichtung (6) des Gruppiermoduls (20) erhöht.

11. Verfahren nach einem der Ansprüche 1 bis 10, bei dem in einer der ersten Vorgruppierung (17) nachgeordneten zweiten Vorgruppierung (18) das Lagenbild unter zumindest teilweiser Aufhebung von zwischen den Stückgütern (2) befindlichen Lücken (L2) in einer Richtung quer zur Transportrichtung (TR) zusammengeschoben wird.

12. Vorrichtung zur Handhabung und/oder Gruppierung von Stückgütern (2) und/oder zur Ausbildung von aus jeweils mehreren Stückgütern (2) bestehenden palettierfähigen Lage,
- mit mindestens einer Zuführeinrichtung (3) zur ein- oder mehrreihige Förderung der Stückgüter in einer Transportrichtung (TR) in jeweils geschlossener, lückenloser Formation (F) zu einem Gruppiermodul (20),
- welches der mindestens einen Zuführeinrichtung (3) in Transportrichtung (TR) nachgeordnete Gruppiermodul (20) wenigstens eine Horizontalfördereinrichtung (6) für den Transport der Stückgüter (2) sowie mindestens einen Manipulator (5) aufweist,
- welcher Manipulator (5) zur Handhabung und/oder Lagenbildung der auf der Horizontalfördereinrichtung (6) transportierten Stückgüter (2) ausgebildet ist,
**dadurch gekennzeichnet, dass**
der Manipulator (5) ausgebildet ist, Stückgüter (2) von der wenigstens einen geschlossenen Formation (F) einzeln oder in Gruppen von zwei oder mehr Stückgütern (2) nacheinander zu erfassen und durch Drehen und/oder Verschieben und/oder Heben in eine definierte Lagenanordnung zu verbringen, bei welcher Lagenanordnung noch Lücken zwischen einzelnen Stückgütern (2) vorhanden sind, die vor dem eigentlichen Palettierschritt noch entfernt werden müssen,
- wobei durch den Manipulator (5) wenigstens ein transportiertes Stückgut (2) klemmend erfassbar, von der geschlossenen Formation (F) räumlich abtrennbar und in eine definierte relative Zielposition und/oder Zielausrichtung gegenüber nachfolgenden Stückgütern (2) der Formation (F) bringbar ist,
- die Vorrichtung weiterhin umfassend ein dem Gruppiermodul (20) in Transportrichtung (TR) nachgeordnetes erstes Fördermittel (30) für den weiteren Transport der in eine mit Lücken behaftete Lagenanordnung gebrachten Stückgüter (2) der vorbereiteten palettierfähigen Lage (12-1) in Transportrichtung (TR),
- wobei die Fördergeschwindigkeit (v6) der Horizontalfördereinrichtung (6) des Gruppiermoduls (20) und die Geschwindigkeit (v30) des Fördermittels (30) in einer Weise steuerbar sind, dass nach jedem Übertritt einer definierten Anzahl von Stückgütern (2), die einer palettierfähigen Lage (12-1) entspricht und/oder sich in vorgesehener Lagenanordnung befindet, eine zumindest kurzzeitige Geschwindigkeitsdifferenz der Fördergeschwindigkeit (v6) der Horizontalfördereinrichtung (6) und der Geschwindigkeit (v30) des Fördermittels (30) in Transportrichtung (TR) zwischen der Horizontalfördereinrichtung (6) des Gruppiermoduls (20) und Fördermittel (30), welches dem Gruppiermodul (20) nachgeordnet ist, vorgesehen und/oder einstellbar ist.

13. Vorrichtung nach Anspruch 12, bei dem es sich bei dem nachgeordneten Fördermittel (30) um ein solches der nachgeordneten ersten Vorgruppierung (17) handelt.

14. Vorrichtung nach Anspruch 12 oder 13, die mit einer Erfassungseinrichtung zur Erfassung des Vorhandenseins von Stückgütern (2) einer nachfolgend durch den Manipulator (5) vorbereiteten zweiten palettierfähigen Lage (12-2) auf dem Fördermittel (30) der Vorgruppierung (17) ausgestattet ist, wobei eine kurzzeitigen Beschleunigung des nachgeordneten Fördermittels (30) und/oder eine kurzzeitige Verzögerung der Horizontalfördereinrichtung (6) nur dann auslösbar und/oder freigebbar ist, wenn durch die Erfassungseinrichtung festgestellt ist, dass diese Stückgüter (2) noch allesamt auf der Horizontalfördereinrichtung (6) des Gruppiermoduls (20) angeordnet sind.

15. Vorrichtung nach einem der Ansprüche 12 bis 14, die mit einem verstellbaren und/oder entfernbaren ersten Anschlagelement (40) ausgestattet ist, das sich quer zur Transportrichtung (TR) erstreckt, und das die Stückgüter (2) einer ersten vorbereiteten palettierfähigen Lage (12-1), die sich komplett auf dem Fördermittel (30) der ersten Vorgruppierung (17) befindet, in Transportrichtung (TR) zu einer ersten komprimierten palettierfähigen Lage (13-1) zusammenschiebt.

16. Vorrichtung nach einem der Ansprüche 12 bis 15, die mit mindestens einem Sensor (45) zur Erfassung eines Anliegens der zuvorderst transportierten Stückgüter (2) einer vorbereiteten palettierfähigen Lage (12-1) am ersten Anschlagelement (40) ausgestattet ist, insbesondere wobei der Sensor durch einen bilderkennenden Sensor und/oder durch mindestens einen am ersten Anschlagelement (40) angeordneten Drucksensor (46) gebildet ist und/oder bei welcher der Sensor (45) Ausgangssignale erzeugt und an eine Steuerungseinheit (15) übermittelt, welche die erhöhten Geschwindigkeiten (v30(+)) des Fördermittels (30) der Vorgruppierung (17) auf die anfängliche Geschwindigkeit (v30) des Fördermittels (30) der ersten Vorgruppierung (17) reduziert und/oder welche die Fördergeschwindigkeit (v6(-)) der Horizontalfördereinrichtung (6) des Gruppiermoduls (20) auf die anfängliche Fördergeschwindigkeit (v6) der Horizontalfördereinrichtung (6) des Gruppiermoduls (20) erhöht.

17. Vorrichtung nach einem der Ansprüche 12 bis 16, die mit einer der ersten Vorgruppierung (17) nachgeordneten zweiten Vorgruppierung (18) ausgestattet ist, wobei die Vorgruppierung (17 und/oder 18) zwei sich parallel zur Transportrichtung (TR) erstreckende zweite Anschlagelemente (50) umfasst, wobei das Lagenbild unter Aufhebung von zwischen den Stückgütern (2) befindlichen Lücken (L2) in einer Richtung quer zur Transportrichtung (TR) zusammengeschoben wird oder zusammenschiebbar ist.

## Claims

1. A method for handling piece goods (2) in the context of grouping the piece goods (2) and/or forming layers thereof, in particular for the purpose of forming palletisable layers that each consist of a plurality of piece goods (2),
- wherein the method provides a single- or multiple-row conveyance of the piece goods (2) in a transport direction (TR), in each case in closed, unspaced formation (F), to a grouping module (20) with at least one horizontal conveyor (6) as well as at least one manipulator (5),
**characterised in that**
- the piece goods (2) are successively seized, individually or in groups of two or more piece goods (2), from the at least one closed formation (F) by the manipulator (5) and are brought into a defined layer arrangement by being rotated and/or shifted and/or lifted, in which layer arrangement there are still spaces present between individual piece goods (2), which spaces still have to be removed prior to the actual palletising step,
- wherein at least one transported piece good (2) is seized in a clamping manner by the manipulator (5), is spatially separated from the closed formation (F), and is brought into a defined relative target position and/or target alignment in relation to subsequent piece goods (2) of the formation (F),
- whereafter the piece goods (2), having been brought into the layer arrangement with spaces present, are transferred onto a conveying means (30) arranged downstream from the grouping module (20),
- and wherein, after each passing over of a defined number of piece goods (2) corresponding to a palletisable layer (12-1) and/or being in an intended layer arrangement, an at least brief speed difference between the conveying speed of the horizontal conveyor (6) of the grouping module (20) and the conveying speed of the conveying means (30) arranged downstream from the grouping module (20) is provided and/or produced in transport direction (TR).

2. The method according to claim 1, wherein the conveying means (30) arranged downstream from the grouping module (20) is a conveying means of a first pre-grouping (17) arranged downstream.

3. The method according to claim 1 or 2, in which the downstream-arranged conveying means (30) is at least briefly accelerated relative to the horizontal conveyor (6) of the grouping module (20) after a passing over of a complete palletisable layer (12-1) of piece goods (2), whereby the piece goods (2) of the palletisable layer (12-1) that has passed over into the pre-grouping (17) are spaced apart from the piece goods (2) in the subsequent layer (12-2) that is still in the grouping module (6).

4. The method according to claim 1 or 2, in which the horizontal conveyor (6) of the grouping module (20) is at least briefly decelerated relative to the downstream-arranged conveying means (30) of the first pre-grouping (17) after a passing over of a complete layer arrangement of piece goods (2), whereby the palletisable layer (12-1) that has passed over into the pre-grouping (17) is spaced apart from the piece goods (2) in the subsequent layer (12-2) that is still in the grouping module (6).

5. The method according to one of the claims 3 or 4, in which the downstream-arranged conveying means (30) of the pre-grouping (17) is at least briefly accelerated relative to the conveying speed (v6) of the horizontal conveyor (6) of the grouping module (20), and/or in which the conveying speed (v6) of the horizontal conveyor (6) of the grouping module (20) is at least briefly decelerated relative to the speed (v30) of the downstream-arranged conveying means (30) of the pre-grouping (17) .

6. The method according to one of the claims 3 to 5, in which the acceleration of the speed (v30) of the downstream-arranged conveying means (30) and/or the deceleration of the conveying speed (v6) of the horizontal conveyor (6) is always carried out when a prepared palletisable layer (12-1) has been put together by the manipulator (5) of the grouping module (20) and has been transferred into the first pre-grouping (17), such that all piece goods (2) of the prepared palletisable layer (12-1) are at least partially arranged on the conveying means (30) of the pre-grouping (17).

7. The method according to one of the claims 1 to 6, in which, prior to a brief acceleration of the downstream-arranged conveying means (30) and/or prior to a brief deceleration of the horizontal conveyor (6), it is detected whether piece goods (2) of a second palletisable layer (12-2) subsequently prepared by the manipulator (5) or of a second palletisable layer (12-2) currently being prepared by the manipulator (5) are located on the conveying means (30) of the pre-grouping (17), and in which a brief acceleration of the conveying means (30) and/or a brief deceleration of the horizontal conveyor (6) is only carried out if these piece goods (2) of the second palletisable layer (12-2) are all still arranged on the horizontal conveyor (6) of the grouping module (20).

8. The method according to one of the claims 1 to 7, in which a prepared palletisable layer (12-1), which is located completely on the conveying means (30) of the first pre-grouping (17), is pushed and/or pressed by the movement in transport direction (TR) against a first stop element (40) extending transversely to the transport direction (TR), whereby the piece goods (2) of the prepared palletisable layer (12-1) are pushed together in transport direction (TR) to a compacted palletisable layer (13-1).

9. The method according to one of the claims 1 to 8, in which the abutting of the foremost transported piece goods (2) of a prepared palletisable layer (12-1) on the first stop element (40) is sensor-detected.

10. The method according to claim 9, in which the sensor (45) transmits corresponding signals to a control unit (15), which reduces the increased speeds (v30(+)) of the conveying means (30) of the pre-grouping (17) to the initial speed (v30) of the conveying means (30) of the first pre-grouping (17), and/or which increases the conveying speed (v6(-)) of the horizontal conveyor (6) of the grouping module (20) to the initial conveying speed (v6) of the horizontal conveyor (6) of the grouping module (20).

11. The method according to one of the claims 1 to 10, in which, with spaces (L2) between the piece goods (2) being at least partially closed, the layer pattern in a second pre-grouping (18) arranged downstream from the first pre-grouping (17) is pushed together in a direction transverse to the transport direction (TR).

12. An apparatus for handling and/or grouping piece goods (2), and/or for forming palletisable layers that each consist of a plurality of piece goods (2),
- with at least one feeder device (3) for the single- or multiple-row conveyance of the piece goods (2) in a transport direction (TR), in each case in closed, unspaced formation (F), to a grouping module (20),
- which grouping module (20) arranged downstream in transport direction (TR) from the at least one feeder device (3) has at least one horizontal conveyor (6) for the transport of the piece goods (2) as well as at least one manipulator (5),
- which manipulator (5) is formed for the handling and/or layer formation of the piece goods (2) being transported on the horizontal conveyor (6),
**characterised in that**
the manipulator (5) is designed to successively seize piece goods (2), individually or in groups of two or more piece goods (2), from the at least one closed formation (F), and to bring the piece goods (2) into a defined layer arrangement by rotating and/or shifting and/or lifting the piece goods (2), in which layer arrangement there are still spaces present between individual piece goods (2), which spaces still have to be removed prior to the actual palletising step,
- wherein at least one transported piece good (2) is seizeable in a clamping manner from the closed formation (F) by the manipulator (5), is spatially separable from the closed formation (F), and is bringable into a defined relative target position and/or target alignment in relation to subsequent piece goods (2) of the formation (F),
- the apparatus furthermore comprising a first conveying means (30) arranged downstream in transport direction (TR) from the grouping module (20), the first conveying means (30) being used for the further transport in transport direction (TR) of the piece goods (2) of the prepared palletisable layer (12-1) having been brought into a layer arrangement with spaces present,
- wherein the conveying speed (v6) of the horizontal conveyor (6) of the grouping module (20) and the speed (v30) of the conveying means (30) are controllable in such a manner that, after each passing over of a defined number of piece goods (2) corresponding to a palletisable layer (12-1) and/or being in an intended layer arrangement, an at least brief speed difference of the conveying speed (v6) of the horizontal conveyor (6) and the speed (v30) of the conveying means (30) is provided and/or adjustable in transport direction (TR) between the horizontal conveyor (6) of the grouping module (20) and the conveying means (30) arranged downstream from the grouping module (20).

13. The apparatus according to claim 12, in which the downstream-arranged conveying means (30) is a conveying means of a first pre-grouping (17) arranged downstream.

14. The apparatus according to claim 12 or 13, which is equipped with a detection device for detecting the presence of piece goods (2) on the conveying means (30) of the pre-grouping (17), which are piece goods (2) of a second palletisable layer (12-2) subsequently prepared by the manipulator (5), wherein a brief acceleration of the downstream-arranged conveying means (30) and/or a brief deceleration of the horizontal conveyor (6) is triggerable and/or approvable only if it has been determined by the detection device that these piece goods (2) are all still arranged on the horizontal conveyor (6) of the grouping module (20).

15. The apparatus according to one of the claims 12 to 14, which is equipped with an adjustable and/or removable first stop element (40), which extends transversely to the transport direction (TR), and which pushes together in transport direction (TR) the piece goods (2) of a first prepared palletisable layer (12-1), which is located completely on the conveying means (30) of the first pre-grouping (17), to a first compacted palletisable layer (13-1).

16. The apparatus according to one of the claims 12 to 15, which is equipped with at least one sensor (45) for detecting an abutting of the foremost transported piece goods (2) of a prepared palletisable layer (12-1) on the first stop element (40), in particular, wherein the sensor is formed by an image-recognizing sensor and/or by at least one pressure sensor (46) arranged on the first stop element (40), and/or in which the sensor (45) generates output signals and transmits them to a control unit (15), which reduces the increased speeds (v30(+)) of the conveying means (30) of the pre-grouping (17) to the initial speed (v30) of the conveying means (30) of the first pre-grouping (17), and/or which increases the conveying speed (v6(-)) of the horizontal conveyor (6) of the grouping module (20) to the initial conveying speed (v6) of the horizontal conveyor (6) of the grouping module (20).

17. The apparatus according to one of the claims 12 to 16, which is equipped with a second pre-grouping (18) arranged downstream from the first pre-grouping (17), wherein the pre-grouping (17 and/or 18) comprises two second stop elements (50) extending parallel to the transport direction (TR), wherein, with spaces (L2) between the piece goods (2) being closed, the layer pattern is or can be pushed together in a direction transverse to the transport direction (TR).

## Revendications

1. Procédé de manipulation de produits de détail (2) dans et/ou en relation avec leur groupement et/ou leur formation de couches, en particulier en vue de la formation de couches palettisables constituées chacune de plusieurs produits de détail (2),
- dans lequel le procédé prévoit un transport en une ou plusieurs rangées des produits de détail (2) dans une direction de transport (TR) dans une formation (F) respectivement fermée et ininterrompue vers un module de groupement (20) comprenant au moins un dispositif de transport horizontal (6) ainsi qu'au moins un manipulateur (5),
**caractérisé par le fait que**
- les produits de détail (2) sont saisis les uns après les autres, au moyen du manipulateur (5), de ladite au moins une formation fermée (F), soit individuellement soit par groupes de deux ou plusieurs produits de détail (2), et sont amenés au moyen du manipulateur (5) dans un agencement en couches défini en les tournant et/ou déplaçant et/ou soulevant, dans lequel il y a encore des lacunes entre des produits de détail (2) individuels, qui doivent encore être éliminées avant l'étape de palettisation proprement dite,
- au moins un produit de détail (2) transporté est saisi par serrage par le manipulateur (5), est séparé spatialement de la formation fermée (F) et est amené dans une position cible et/ou orientation cible relative(s) définie(s) par rapport à des produits de détail (2) suivants de la formation (F),
- ce après quoi les produits de détail (2) amenées dans l'agencement en couches à lacunes sont transférés sur un moyen de convoyage (30) disposé en aval du module de groupement (20),
- et dans lequel, après chaque passage d'un nombre défini de produits de détail (2), qui correspond à une couche palettisable (12-1) et/ou se trouve dans l'agencement en couches prévu, une différence de vitesse au moins de courte durée des vitesses de transport dans la direction de transport (TR) entre le dispositif de transport horizontal (6) du module de groupement (20) et le moyen de convoyage (30) disposé en aval du module de groupement (20) est prévue et/ou réalisée.

2. Procédé selon la revendication 1, dans lequel le moyen de convoyage (30) qui est disposé en aval du module de groupement (20) est un moyen de convoyage d'un premier pré-groupement (17) situé en aval.

3. Procédé selon la revendication 1 ou 2, dans lequel, après le passage d'une couche palettisable complète (12-1) de produits de détail (2), le moyen de convoyage (30) situé en aval est accéléré au moins pour une courte durée par rapport au dispositif de transport horizontal (6) du module de groupement (20) ce par quoi les produits de détail (2) de la couche palettisable (12-1) passée au pré-groupement (17) sont espacés des produits de détail (2) de la couche suivante (12-2) se trouvant toujours dans le module de groupement (6).

4. Procédé selon la revendication 1 ou 2, dans lequel, après le passage d'un agencement en couches complet de produits de détail (2), le dispositif de transport horizontal (6) du module de groupement (20) est retardé au moins pour une courte durée par rapport au moyen de convoyage situé en aval (30) du premier pré-groupement (17) ce par quoi la couche palettisable (12-1) qui est passée au pré-groupement (17) est espacée des produits de détail (2) de la couche suivante (12-2) se trouvant toujours dans le module de groupement (6).

5. Procédé selon l'une quelconque des revendications 3 ou 4, dans lequel le moyen de convoyage situé en aval (30) du pré-groupement (17) est accéléré au moins pour une courte durée par rapport à la vitesse de transport (v6) du dispositif de transport horizontal (6) du module de groupement (20), et/ou dans lequel la vitesse de transport (v6) du dispositif de transport horizontal (6) du module de groupement (20) est retardée au moins pour une courte durée par rapport à la vitesse (v30) du moyen de convoyage situé en aval (30) du pré-groupement (17).

6. Procédé selon l'une quelconque des revendications 3 à 5, dans lequel l'accélération de la vitesse (v30) du moyen de convoyage (30) situé en aval et/ou la décélération de la vitesse de transport (v6) du dispositif de transport horizontal (6) a toujours lieu lorsque le manipulateur (5) du module de groupement (20) a créé une couche palettisable préparée (12-1) et a transféré celle-ci au premier pré-groupement (17) de sorte que tous les produits de détail (2) de la couche palettisable (12-1) préparée sont disposés au moins en partie sur le moyen de convoyage (30) du pré-groupement (17).

7. Procédé selon l'une quelconque des revendications 1 à 6, dans lequel, avant une accélération de courte durée du moyen de convoyage (30) situé en aval et/ou avant une décélération de courte durée du dispositif de transport horizontal (6), il est détecté si des produits de détail (2) d'une deuxième couche palettisable (12-2) préparée ensuite par le manipulateur (5) ou d'une deuxième couche palettisable (12-2) en cours de préparation par le manipulateur (5) se trouvent sur le moyen de convoyage (30) du pré-groupement (17), et qu'une accélération de courte durée du moyen de convoyage (30) et/ou une décélération de courte durée du dispositif de transport horizontal (6) ne se produit que lorsque ces produits de détail (2) de la deuxième couche palettisable (12-2) sont toujours tous disposés sur le dispositif de transport horizontal (6) du module de groupement (20).

8. Procédé selon l'une quelconque des revendications 1 à 7, dans lequel une couche palettisable préparée (12-1) qui se trouve complètement sur le moyen de convoyage (30) du premier pré-groupement (17), est poussée et/ou plaquée par le mouvement dans la direction de transport (TR) contre un premier élément de butée (40) s'étendant transversalement à la direction de transport (TR) ce par quoi les produits de détail (2) de la couche palettisable préparée (12-1) sont poussés les uns contre les autres dans la direction de transport (TR) pour former une couche palettisable comprimée (13-1).

9. Procédé selon l'une quelconque des revendications 1 à 8, dans lequel l'appui des produits de détail (2) transportés en premier d'une couche palettisable préparée (12-1), sur le premier élément de butée (40) est détecté par capteur.

10. Procédé selon la revendication 9, dans lequel le capteur (45) transmet des signaux correspondants à une unité de commande (15) qui réduit les vitesses accrues (v30 (+)) du moyen de convoyage (30) du pré-groupement (17) à la vitesse initiale (v30) du moyen de convoyage (30) du premier pré-groupement (17) et/ou qui augmente la vitesse de transport (v6(-)) du dispositif de transport horizontal (6) du module de groupement (20) à la vitesse de transport initiale (v6) du dispositif de transport horizontal (6) du module de groupement (20).

11. Procédé selon l'une quelconque des revendications 1 à 10, dans lequel, dans un deuxième pré-groupement (18) situé en aval du premier pré-groupement (17), le motif de couches est comprimé dans une direction transversale à la direction de transport (TR) en éliminant au moins en partie des lacunes (L2) situées entre les produits de détail (2).

12. Dispositif de manipulation et/ou de groupement de produits de détail (2) et/ou de formation de couches palettisables constituées chacune de plusieurs produits de détail (2),
- avec au moins un dispositif d'amenée (3) destiné à transporter en une ou plusieurs rangées les produits de détail (2) dans une direction de transport (TR) dans une formation respectivement fermée et ininterrompue vers un module de groupement (20),
- lequel module de groupement (20) disposé en aval dudit au moins un dispositif d'amenée (3) dans la direction de transport (TR) présente au moins un dispositif de transport horizontal (6) pour le transport des produits de détail (2) ainsi qu'au moins un manipulateur (5),
- lequel manipulateur (5) est conçu pour la manipulation et/ou la formation de couches des produits de détail (2) transportés sur le dispositif de transport horizontal (6),
**caractérisé par le fait que**
le manipulateur (5) est conçu pour saisir des produits de détail (2) les uns après les autres de ladite au moins une formation fermée (F), soit individuellement soit par groupes de deux ou plusieurs produits de détail (2), et pour amener ceux-ci dans un agencement en couches défini en les tournant et/ou déplaçant et/ou soulevant, dans lequel agencement en couches il y a encore des lacunes entre des produits de détail (2) individuels, qui doivent encore être éliminées avant l'étape de palettisation proprement dite,
- dans lequel, au moyen du manipulateur (5), au moins un produit de détail (2) transporté peut être saisi par serrage, peut être séparé spatialement de la formation fermée (F) et peut être amené dans une position cible et/ou orientation cible relative(s) définie(s) par rapport à des produits de détail (2) suivants de la formation (F),
- le dispositif comprenant en outre un premier moyen de convoyage (30) disposé en aval du module de groupement (20) dans la direction de transport (TR) et destiné à continuer à transporter les produits de détail (2) de la couche palettisable préparée (12-1), amenés dans un agencement en couches à lacunes, dans la direction de transport (TR),
- dans lequel la vitesse de transport (v6) du dispositif de transport horizontal (6) du module de groupement (20) et la vitesse (v30) du moyen de convoyage (30) peuvent être commandées d'une telle manière que, après chaque passage d'un nombre défini de produits de détail (2) qui correspond à une couche palettisable (12-1) et/ou se trouve dans un agencement en couches prévu, une différence de vitesse au moins de courte durée de la vitesse de transport (v6) du dispositif de transport horizontal (6) et de la vitesse (v30) du moyen de convoyage (30) dans la direction de transport (TR) entre le dispositif de transport horizontal (6) du module de groupement (20) et le moyen de convoyage (30) disposé en aval du module de groupement (20) peut être prévue et/ou réglée.

13. Dispositif selon la revendication 12, dans lequel le moyen de convoyage (30) disposé en aval est un moyen de convoyage du premier pré-groupement (17) situé en aval.

14. Dispositif selon la revendication 12 ou 13, qui est équipé d'un dispositif de détection destiné à détecter la présence de produits de détail (2) d'une deuxième couche palettisable (12-2) préparée ensuite par le manipulateur (5), sur le moyen de convoyage (30) du pré-groupement (17), dans lequel une accélération de courte durée du moyen de convoyage (30) situé en aval et/ou une décélération de courte durée du dispositif de transport horizontal (6) ne peut être déclenchée et/ou libérée que si le dispositif de détection détecte que ces produits de détail (2) sont tous disposés encore sur le dispositif de transport horizontal (6) du module de groupement (20).

15. Dispositif selon l'une quelconque des revendications 12 à 14, qui est équipé d'un premier élément de butée (40) réglable et/ou détachable qui s'étend transversalement à la direction de transport (TR) et qui pousse les uns contre les autres les produits de détail (2) d'une première couche palettisable préparée (12-1) se trouvant complètement sur le moyen de convoyage (30) du premier pré-groupement (17), dans la direction de transport (TR) pour qu'ils forment une première couche palettisable comprimée (13-1).

16. Dispositif selon l'une quelconque des revendications 12 à 15, qui est équipé d'au moins un capteur (45) destiné à détecter un appui des produits de détail (2) transportés en premier, d'une couche palettisable préparée (12-1), sur le premier élément de butée (40), en particulier dans lequel le capteur est formé par un capteur de reconnaissance d'image et/ou par au moins un capteur de pression (46) disposé sur le premier élément de butée (40) et/ou dans lequel le capteur (45) génère des signaux de sortie et transmet ceux-ci à une unité de commande (15) qui réduit les vitesses accrues (v30 (+)) du moyen de convoyage (30) du pré-groupement (17) à la vitesse initiale (v30) du moyen de convoyage (30) du premier pré-groupement (17) et/ou qui augmente la vitesse de transport (v6(-)) du dispositif de transport horizontal (6) du module de groupement (20) à la vitesse de transport initiale (v6) du dispositif de transport horizontal (6) du module de groupement (20).

17. Dispositif selon l'une quelconque des revendications 12 à 16, qui est équipé d'un deuxième pré-groupement (18) situé en aval du premier pré-groupement (17), dans lequel le pré-groupement (17 et/ou 18) comprend deux deuxièmes éléments de butée (50) s'étendant parallèlement à la direction de transport (TR), dans lequel le motif de couches est ou peut être comprimé dans une direction transversale à la direction de transport (TR) en éliminant des lacunes (L2) situées entre les produits de détail (2).
